(19) **Europäisches Patentamt / European Patent Office / Office européen des brevets**

(11) **EP 3 131 283 A1**

(12) # EUROPEAN PATENT APPLICATION
published in accordance with Art. 153(4) EPC

(43) Date of publication:
**15.02.2017 Bulletin 2017/07**

(21) Application number: **16754907.0**

(22) Date of filing: **04.02.2016**

(51) Int Cl.:
**H04N 5/232** $^{(2006.01)}$ **G06T 5/50** $^{(2006.01)}$
**H04N 5/225** $^{(2006.01)}$

(86) International application number:
**PCT/JP2016/000573**

(87) International publication number:
**WO 2016/136151 (01.09.2016 Gazette 2016/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **25.02.2015 JP 2015035821**

(71) Applicant: **Panasonic Intellectual Property Management Co., Ltd.**
**Osaka-shi, Osaka 540-6207 (JP)**

(72) Inventors:
• **YAMADA, Hitoshi**
  **Osaka-shi, Osaka 540-6207 (JP)**
• **IMAGAWA, Taro**
  **Osaka-shi, Osaka 540-6207 (JP)**

(74) Representative: **Grünecker Patent- und Rechtsanwälte**
**PartG mbB**
**Leopoldstraße 4**
**80802 München (DE)**

(54) **IMAGE PROCESSING DEVICE, IMAGE PROCESSING METHOD AND PROGRAM FOR EXECUTING SAME**

(57)     Image processing device (100) includes a correction unit (101) and a determination unit (102). The correction unit performs correction for suppressing image fluctuations on each of a plurality of input images using a correction parameter and outputs results of the correction as a plurality of corrected images. The determination unit (i) calculates a first distribution and a second distribution. The first distribution represents a frequency distribution of edge angles in a given input image of the plurality of input images. The second distribution represents a frequency distribution of edge angles in a given corrected image that is the given input image corrected by the correction unit and is output. The determination unit (ii) performs a first determination that determines presence or absence of fluctuations in the given input image using the first and the second distributions calculated, and (iii) performs updating of the correction parameter using results of the first determination.

FIG. 1

EP 3 131 283 A1

**Description**

TECHNICAL FIELD

The present disclosure relates to an image processing device and an image processing method that correct image fluctuations.

BACKGROUND ART

There has been known a monitoring system that photographs a given space using a camera device such as a monitoring camera to monitor the space. Examples of this monitoring camera include a fixed monitoring camera that monitors only a predetermined place; and a monitoring camera that has a panning function and monitors a wide range of place while panning.

Such a camera device (e.g., a monitoring camera) may produce images with image fluctuations. Image fluctuations are a phenomenon due to characteristic change of a light transmission medium. Concretely, image fluctuations are a phenomenon due to change of the refractive index of a medium (e.g., air, water) that transmits light from an object.

Image fluctuations occur for example by change of the density of air due to the temperature difference in the atmosphere during photographing in a hot outdoor environment, which is what is called heat haze. Image fluctuations also occur during underwater photographing.

In a monitoring system that detects an abnormal event for example from photographed moving images, image fluctuations in frames composing the photographed moving images may undesirably cause incorrect detection. Hence, PTLs 1 and 2 for example disclose an image processing device that corrects image fluctuations.

Citation List

Patent Literature

PTL1: Japanese Patent Unexamined Publication No. 2011-229030
PTL 2: Japanese Patent Unexamined Publication No. 2013-236249

SUMMARY OF THE INVENTION

The present disclosure provides an image processing device and an image processing method that appropriately correct image fluctuations even if the strength of image fluctuations changes.

To solve the above-described problem, an image processing device according to the present disclosure includes a correction unit and a determination unit. The correction unit performs correction for suppressing image fluctuations on each of a plurality of input images using a correction parameter and outputs results of the correction as a plurality of corrected images. The determination unit (i) calculates a first distribution and a second distribution. The first distribution represents a frequency distribution of edge angles in a given input image of the plurality of input images. The second distribution represents a frequency distribution of edge angles in a given corrected image that is the given input image corrected by the correction unit and is output. The determination unit (ii) performs a first determination that determines presence or absence of fluctuations in the given input image using the first and the second distributions calculated, and (iii) performs updating of the correction parameter using results of the first determination.

According to the present disclosure, image fluctuations can be appropriately corrected even if the strength of image fluctuations changes.

BRIEF DESCRIPTION OF DRAWINGS

FIG. 1 is a block diagram illustrating the configuration of an image processing device according to the first exemplary embodiment.
FIG. 2A shows an image without fluctuations according to the first embodiment.
FIG. 2B illustrates a correction method that generates an average image from continuous multiple frames, according to the first embodiment.
FIG. 3 is a flowchart showing an example of operation (update process) of the image processing device according to the first embodiment.

FIG. 4 illustrates how edge angles are obtained, according to the first embodiment.

FIG. 5 is a flowchart showing an example of the process of obtaining a peak angle, according to the first embodiment.

FIG. 6 illustrates edge angles of an image without fluctuations and the angle histogram of the image, according to the first embodiment.

FIG. 7 illustrates edge angles of an image with fluctuations and the angle histogram of the image, according to the first embodiment.

FIG. 8 illustrates edge angles of an image after correction and the angle histogram of the image, according to the first embodiment.

FIG. 9 is a flowchart illustrating an example of the process of setting a correction parameter, according to the first embodiment.

FIG. 10 illustrates angle histograms of multiple corrected images corrected using different correction parameters, according to the first embodiment.

FIG. 11 is a block diagram illustrating the configuration of an image processing device according to the second exemplary embodiment.

FIG. 12 illustrates some related images when an average image has been created from an image without being position-aligned by motion compensation, according to the second embodiment.

FIG. 13 illustrates some related images when an average image has been created from an image position-aligned by motion compensation, according to the second embodiment.

FIG. 14 illustrates an example product of a monitoring camera including an image processing device according to an exemplary embodiment.

## DESCRIPTION OF EMBODIMENTS

The inventors have found the following problem about an existing image processing device described under BACKGROUND ART.

For example, an image processing device described in PTLs 1 and 2 detects whether or not image fluctuations are occurring. If image fluctuations are occurring, a correction process with a predetermined strength is performed.

However, the level of the correction process is the same, and thus image fluctuations cannot be corrected appropriately when the degree of fluctuations changes.

To solve such a problem, the present disclosure provides an image processing device and an image processing method that appropriately correct image fluctuations even if the strength of fluctuations changes.

Hereinafter, a detailed description is made of some exemplary embodiments referring to the related drawings as appropriate. However, a detailed description more than necessary may be omitted, such as a detailed description of a well-known item and a duplicate description for a substantially identical component, to avoid redundant description and to allow those skilled in the art to easily understand the following description.

The accompanying drawings and the following description are provided for those skilled in the art to well understand the disclosure and are not intended to limit the subjects described in the claims.

The drawings are schematic and are not necessarily illustrated precisely. In the drawings, the same component is given the same reference mark.

## FIRST EXEMPLARY EMBODIMENT

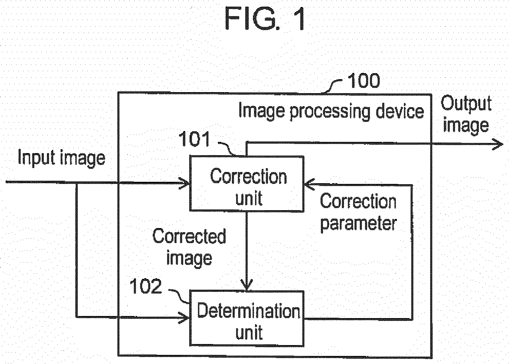

Hereinafter, a description is made of the first embodiment using FIGs. 1 through 5.

1-1 Overview of image processing device

First, a description is made of the configuration of an image processing device according to this embodiment using FIG. 1. FIG. 1 is a block diagram illustrating a configuration example of the image processing device according to this embodiment, regarding a fixed camera without panning (i.e., a camera continuing to take a specific, same scene). Note that the image processing device according to this embodiment corrects fluctuations of an input image using multiple frames of images.

Here, image fluctuations refer to a phenomenon caused by characteristic change of a light transmission medium. For example, image fluctuations are a phenomenon (Schlieren phenomenon) such as heat haze caused by change of the refractive index of a medium (e.g., air, water) that transmits light from an object. In simple words, image fluctuations are a phenomenon in which a fixed, still object is seen moving. Accordingly, image fluctuations, unlike camera shake, occur even in an image taken by a fixed camera. Especially, a moving image taken with a telephoto lens prominently undergoes the influence of image fluctuations because of a long path from an object to the camera.

Input image fluctuations refer to a phenomenon in which the shape of an object is deformed in the input image. In a simple example, if image fluctuations are not present in the input image, an edge is seen straight; otherwise, curved. In camera shake as well, an edge appears at a position deviated from the intended one; however, the direction and amount of the deviation is approximately constant. That is to say, in camera shake, the entire image deviates to a common direction by the substantially same amount. On the other hand, in image fluctuations, the direction in which and the amount by which an edge is deformed are irregular for every pixel. The expression "correct image fluctuations" means that "reduce or eliminate deviation of pixels caused by fluctuations in an input image.

1-2 Detailed configuration of image processing device

Image processing device 100 according to this embodiment captures multiple input images from moving images taken at different time points; corrects fluctuations of input images captured; and generates corrected images and outputs them. As shown in FIG. 1, image processing device 100 includes correction unit 101 and determination unit 102.

1-2-1 Correction unit

Correction unit 101 corrects the respective input images using a correction parameter and outputs the results as corrected image. In other words, correction unit 101 corrects image fluctuations of multiple input images with reference to a correction parameter. Concretely, correction unit 101 performs correction by outputting an average image that is produced by averaging a given number of input images (including a given input image) of the multiple input images. Here, the correction parameter is the number of input images for generating an average image. That is, correction unit 101 corrects given input images by generating an average image that is produced by averaging some number of input images (including a given input image) of the multiple input images.

For example, when a scene of heat haze is taken by a fixed camera, the taken image fluctuates. An object in the fluctuating image deviates in the photographing position about the intended position without image fluctuations for every frame. Making use of this fact, correction unit 101 generates an average image produced by averaging multiple frames. The position of an object on the average image from multiple frames is predominantly decided by the position without fluctuations due to averaging, approaching the position without fluctuations, which allows fluctuations of input images to be corrected.

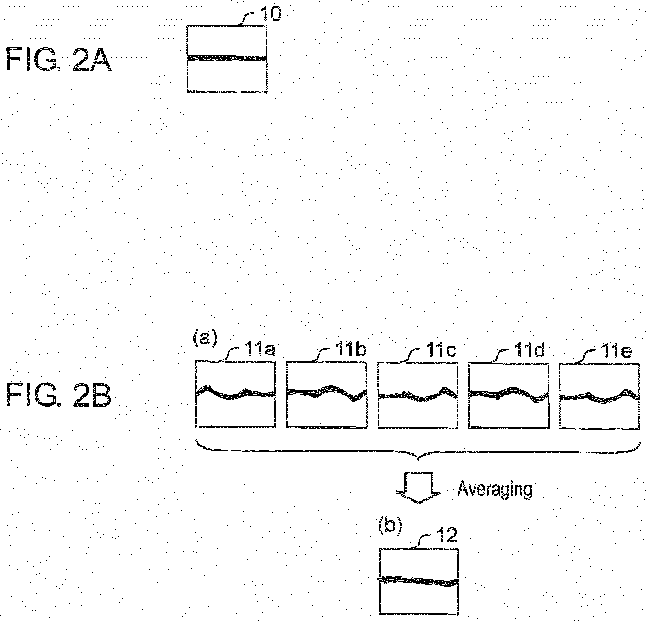

FIG. 2A illustrates an image without fluctuations, according to the first embodiment. FIG. 2B illustrates a correction method that generates an average image from continuous multiple frames, according to the first embodiment. Concretely, FIG. 2B(a) illustrates continuous five frames in a case where fluctuations occur in the image shown in FIG. 2A. FIG. 2B(b) illustrates an average image generated using five frames of images shown by FIG. 2B(a).

As shown in FIG. 2A, image 10 photographed in a state without fluctuations has a line segment horizontally extending at the vertical center of image 10. When image fluctuations occur in such image 10, multiple input images 11a through 11e (multiple frames) are produced each of which has a line formed of a combination of wavy or zigzag lines on the basis of the horizontally extending line segment, as shown by FIG. 2B(a). The degree of fluctuations and the spatial position where fluctuations occur change at different time points, and thus multiple input images 11a through 11e photographed at different time points as shown in FIG. 2B(a) have lines of different shapes.

Here, as a result that correction unit 101 performs correction by averaging these multiple input image 11a through 11e, correction unit 101 obtains corrected image 12 that has fluctuations smaller than each of multiple input images 11a through 11e. That is, as a result that corrected image 12 undergoes the above-described correction, the horizontally extending lines that respective multiple input images 11a through 11e have can be approximated to a state without fluctuations.

More specifically, correction unit 101 averages $m$ ($m$ is a natural number) pieces of input images (frames) for every pixel to generate one corrected image. Here, $m$ is a natural number 2 or larger when correction is performed, and an example of the correction parameter decided by determination unit 102.

Not only correction unit 101 performs correction by averaging $m$ pieces of input images, but correction unit 101 may perform correction by averaging $m$ pieces of weighted-added input images. In this case, the weight used for weighted addition for example may be larger for an input image at a frame closer to time point $t$ when a given input image has been taken. Besides, among multiple input images targeted for averaging in correction, weighted-added input images may be averaged with a large weight only for a given input image at time point $t$, and with a weight smaller than that for the given input image and common to the remaining multiple input images.

1-2-2 Determination unit

Determination unit 102 receives a given input image and its image corrected by correction unit 101 to determine whether image fluctuations are occurring in the given input image. Then, determination unit 102 rewrites the value of the correction parameter, which is referred to by correction unit 101, stored in memory (not shown) according to the determination result.

Concretely, determination unit 102 calculates a first distribution and a second distribution. The first distribution represents a frequency distribution of edge angles in a given input image of the multiple input images. The second distribution represents a frequency distribution of edge angles in a given corrected image that is the given input image corrected by the correction unit and is output. Then, determination unit 102 performs a first determination that determines the presence or absence of fluctuations in the given input image using the first and second distributions calculated. Further, determination unit 102 updates the correction parameter using the result of the first determination.

Determination unit 102, if the first determination represents that the shape of the second distribution is more peaked than that of the first distribution, determines that fluctuations are present in the given input image; otherwise, determines that fluctuations are not present. Then, determination unit 102, if determining that fluctuations are present in the given input image, updates the value of the correction parameter; otherwise, does not update.

Determination unit 102 calculates a first frequency and a second frequency, at an edge angle (hereinafter, referred to as a peak angle) at which the frequency reaches a peak to specify a peak angle (hereinafter, referred to as a common peak angle) common to each angle histogram. Then, determination unit 102, if the first determination represents that the second frequency at the common peak angle in the second distribution exceeds the first frequency at the common peak angle in the first distribution, determines that the shape of the second distribution is more peaked than that of the first distribution; otherwise, not more peaked.

Determination unit 102, if determining that fluctuations are present in the given input image, updates the value of the correction parameter by updating the number (i.e., the correction parameter) of pieces of multiple input images targeted for averaging.

Determination unit 102 may further perform the second determination that determines whether or not the second frequency at the peak angle in the second distribution exceeds a target value with reference to the first frequency at the peak angle in the first distribution. Then, determination unit 102, if the second determination represents that the second frequency exceeds the target value, changes the value of the correction parameter to reduce the strength of correction until the second frequency becomes smaller than the target value, and decides the value of the correction parameter that has been changed immediately before the second frequency becomes smaller than the target value, as a new value of the correction parameter, to update the correction parameter; otherwise, changes the value of the correction parameter to increase the strength of correction until the second frequency becomes equal to or larger than the target value, and decides the value of the correction parameter when the second frequency becomes equal to or larger than the target value, as a new value of the correction parameter, to update the correction parameter.

1-3 Operation of image processing device

Hereinafter, a description is made of operation of image processing device 100 configured as above.

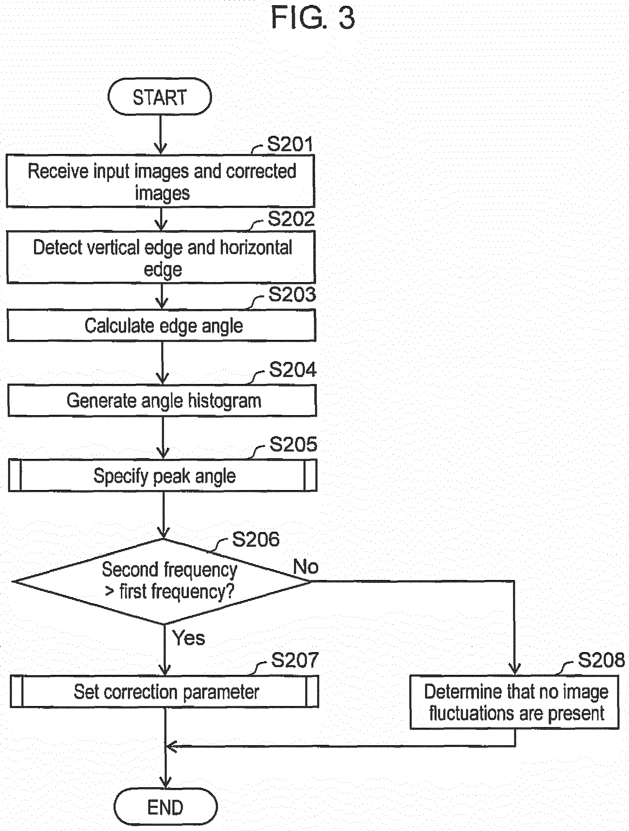

Image processing device 100 updates the value of the correction parameter using the result of the first determination that determines the presence or absence of fluctuations in an input image. Image processing device 100 of this embodiment performs determination, as an example of the first determination, using edge angles contained in the given input image and in the corrected image obtained by correcting multiple input images. Hereinafter, a description is made of the details of operation (the update process) of image processing device 100 using FIG. 3.

1-3-1 Update process

FIG. 3 is a flowchart illustrating an example of operation (the update process) of an image processing device according to the first embodiment. Here, assumption is made that correction is performed for a given input image of multiple input images by averaging the multiple input images before the update process, and a given corrected image that is the correction result has been obtained.

First, determination unit 102 reads a given input image and a given corrected image (S201). That is, a given input image and a given corrected image are input to determination unit 102.

Next, determination unit 102 detects an edge intensity in the given input image and that in the given corrected image (S202). Determination unit 102 calculates vertical and horizontal edge intensities for example in the given input image and the given corrected image using the Sobel filter.

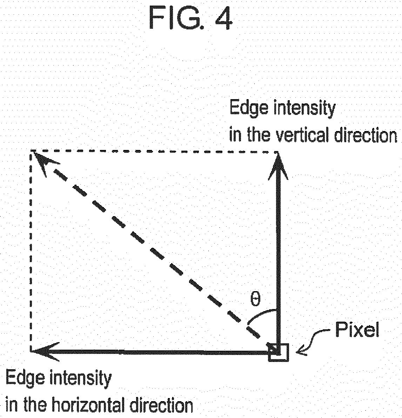

Subsequently, determination unit 102 calculates an edge angle of each pixel from the vertical and horizontal edge intensities of each pixel of each image detected (S203). FIG. 4 illustrates the operation of obtaining an edge angle according to the first embodiment. Concretely, FIG. 4 illustrates edge angle θ calculated for a pixel. Each pixel in each image has edge intensities in the vertical and horizontal directions, and thus edge angle θ is calculated by combining the vertical edge intensity with the horizontal one for each pixel. In this way, determination unit 102 calculates edge angle θ for all the pixels in each image. Here, one of the vertical and horizontal edge intensities may be zero. If the vertical edge intensity is zero, edge angle θ is 90° or 270°; if the horizontal edge intensity is zero, edge angle θ is 0° (360°) or 180°.

Edge angle θ does not need to be calculated for all the pixels, but edge angle θ may be calculated only for a pixel having an edge intensity larger than a given predetermined threshold. This is for the following reason. Image fluctuations produced, due to heat haze for example, are easily perceived mainly on an edge (a line segment), where the contrast difference is outstanding. Meanwhile, an edge angle can be obtained even in a region (e.g., a sky, a background without a specific pattern) of an image where the edge intensity is lower than a given threshold. However, a pixel in such a region is not on a line segment, and thus the influence of image fluctuations produced in the region is less subject to being perceived. That is, an edge angle obtained in a region (e.g., a sky, a background without a specific pattern) where the edge intensity is lower than a given threshold is not especially useful information.

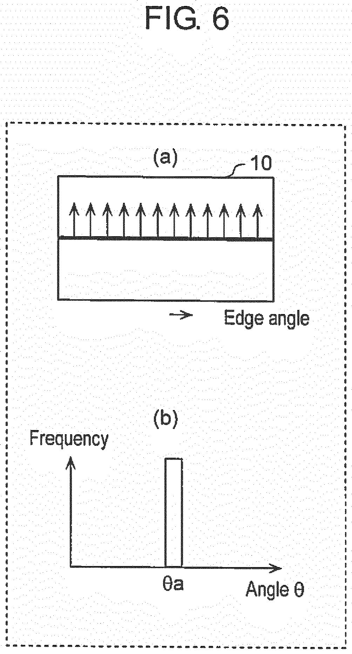

Next, determination unit 102 generates an angle histogram that is a frequency distribution of edge angles calculated for each pixel in a given input image and a given corrected image (S204). Concretely, determination unit 102 generates a first angle histogram (a first distribution) for the given input image and generates a second angle histogram (a second distribution) for the given corrected image. Here, an angle histogram is generated as shown by each (b) of FIGs. 6 through 8 (described later) for example.

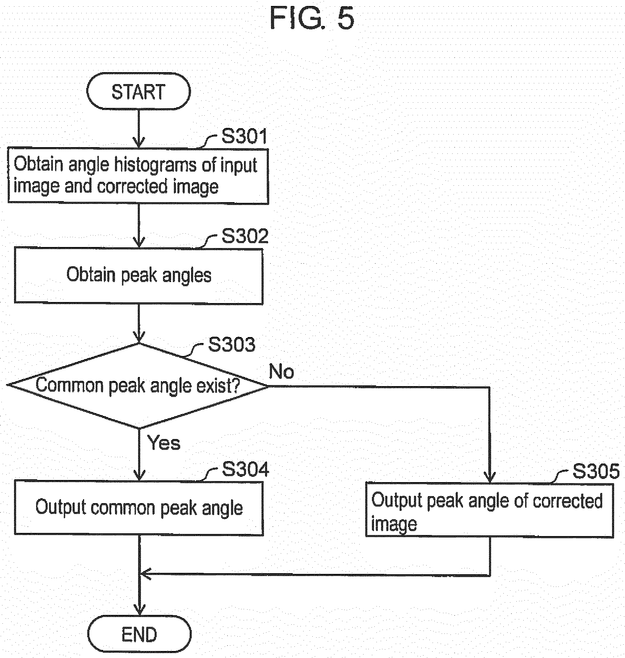

Next, determination unit 102 specifies a peak angle (a common peak angle) common to each angle histogram using the first and second angle histograms generated (S205). The details about the process of specifying a peak angle in step S205 are described later using FIG. 5.

Next, determination unit 102 compares the first frequency at the common peak angle in the first angle histogram with the second frequency at the second peak angle in the second angle histogram. Then, determination unit 102 determines whether or not the second frequency exceeds the first frequency (S206). With this process, determination unit 102 performs the first determination that determines the presence or absence of fluctuations in the given input image.

Determination unit 102, if determining that the second frequency exceeds the first frequency (Yes in S206), determines that the shape of the second distribution is more peaked than that of the first distribution. With this process, determination unit 102 determines that image fluctuations are present in the given input image and performs the process of setting the correction parameter (S207).

Determination unit 102, if determining that the second frequency is equal to or smaller than the first frequency (No in S206), determines that the shape of the second angle histogram is not more peaked than that of the first angle histogram. With this process, determination unit 102 determines that image fluctuations are not present in the given input image (S208).

1-3-2 Process of specifying peak angle

Next, a detailed description is made of the process (S205) of specifying a peak angle executed on the basis of the first and second angle histograms respectively generated from the given input image and the given corrected image using FIG. 5.

FIG. 5 is a flowchart showing an example of the process of specifying a peak angle according to the first embodiment.

In the process of specifying an peak angle, determination unit 102 receives a first angle histogram of the given input image and a second angle histogram of the given corrected image, both generated in step S204 (FIG. 3) of the update process, and specifies a common peak angle on the basis of the respective peak angles in the first and second angle histograms having been input.

In the process specifying a common peak angle, determination unit 102 first obtains the first angle histogram of the given input image and the second angle histogram of the given corrected image, both generated in step S204 (S301).

Determination unit 102 calculates peak angles from the first and second angle histograms obtained (S302). Here, a peak angle is assumed to be an angle having the maximum frequency in a range from 0° to 180° for example in an angle histogram. Here, it is not required to obtain only one peak angle from one angle histogram. For example, a peak angle may be an angle having the maximum frequency in a range from 0° to 90°; another peak angle may be an angle having the maximum frequency in a range from 90° to 180°. That is, one angle histogram is divided into multiple angle ranges, and one peak angle may be specified from each of the angle ranges. In other words, more than one peak angle may be obtained from one angle histogram.

Next, determination unit 102 determines whether or not the peak angles specified respectively in the first and second angle histograms are a common (the same) angle (S303). Determination unit 102 compares the frequencies at the common peak angle for the first and second angle histograms in step S206 (FIG. 3) of the update process. For this reason, peak angle N specified from the first angle histogram of the given input image needs to agree with peak angle C specified from the angle histogram of the given corrected image. That is, determination unit 102 determines whether or not peak angle N is equal to peak angle C in step S303.

Next, determination unit 102, if determining that the peak angles specified in the first and second angle histograms are a common (the same) angle (Yes in S303), the peak angle is specified as a common peak angle (S304). Concretely, determination unit 102, if peak angle N is equal to peak angle C, outputs peak angle N (peak angle C) as a common peak angle.

Meanwhile, determination unit 102, if determining that the peak angles specified in the first and second angle histograms are not a common (the same) angle (No in S303), specifies the peak angle specified in the second angle histogram as a common peak angle. In other words, determination unit 102, if peak angle N is not equal to peak angle C, outputs peak angle C as a common peak angle (S305). This is because an angle in the angle histogram of the given corrected image is supposedly closer to an angle derived from an image without fluctuations.

1-3-3 Concept of how to determine image fluctuations

Next, a description is made of the concept of a method of determining image fluctuations using FIGs. 6 through 8.

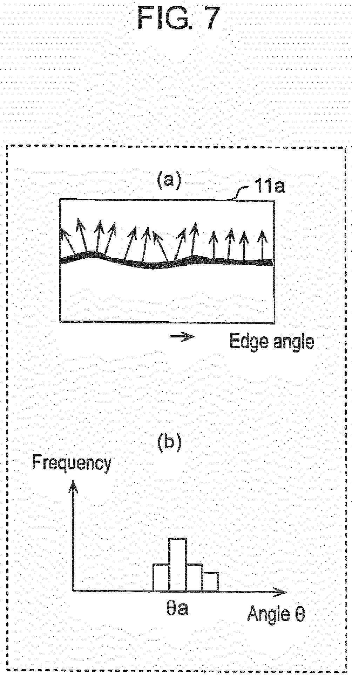

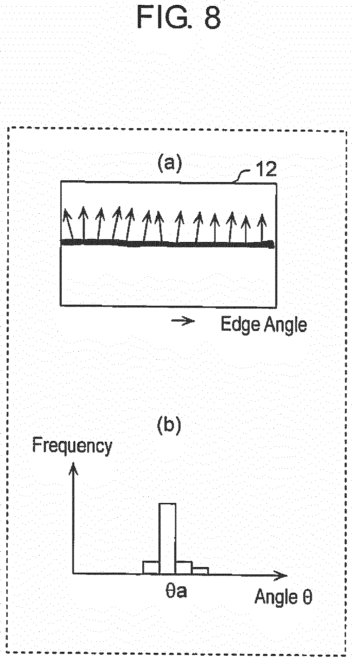

FIG. 6 illustrates edge angles of an image without fluctuations and the angle histogram of the image, according to the first embodiment. FIG. 7 illustrates edge angles of an image with fluctuations and the angle histogram of the image, according to the first embodiment. FIG. 8 illustrates edge angles of an image after correction and the angle histogram of the image, according to the first embodiment.

As shown by FIG. 6 (a), image 10 photographed in a state without fluctuations has a line segment horizontally extending at the vertical center of image 10. The edge angles for this image 10 are represented by vertically upward arrows as shown by the arrow symbols. Then, totaling these edge angles provides the angle histogram shown by FIG. 6 (b). In the angle histogram of FIG. 6 (b), edge angles are all 0°, and thus peak angle $\theta a$ is 0°. In other words, the angle histogram shown by FIG. 6 (b) is to have frequencies only at peak angle $\theta a$. Here, the bin width of the angle histogram may be set to a unit of 1° or a little larger (e.g., 5°) to reduce the influence of noise for example.

In input image 11a that is image 10 fluctuating, the shape of the line segment vertically deviates, and thus the line segment is deformed with curved and zigzag lines as shown by FIG. 7 (a). The edge angles in this input image 11a are represented by arrows with their angles horizontally deviated from a vertically upward arrow as shown by the arrow symbols. Then, totaling these edge angles provides the first angle histogram shown by FIG. 7 (b). In the first angle histogram shown by FIG. 7 (b), the shape of the line segment has changed due to fluctuations to disperse the direction of the edge angles, and thus the edge angles are distributed around peak angle $\theta a$.

Corrected image 12 obtained by correction executed is restored so that the shape of the central straight line is close to the line segment of image 10 without fluctuations as shown by FIG. 8 (a). The edge angles in this corrected image 12 are represented by arrows more uniformly oriented vertically upward than those of FIG. 7 (a) as shown by the arrow symbols. Then, totaling these edge angles provides the second angle histogram (the second distribution) shown by FIG. 8 (b). In the second angle histogram shown by FIG. 8 (b), corrected image 12 is close to the shape of image 10 without fluctuations from that of input image 11a with fluctuations, and thus the edge angles in corrected image 12 are close to those of image 10.

This situation is the same for the shape of an angle histogram. The shape of the second angle histogram of FIG. 8 (b) becomes closer to that of the first angle histogram of FIG. 6 (b). What is especially characteristic is the frequency of peak angle $\theta a$. Focusing attention on the frequency of peak angle $\theta a$, the first frequency (refer to FIG. 7 (b)) at peak angle $\theta a$ of input image 11a with fluctuations are smaller than the second frequency at peak angle $\theta a$ of corrected image 12 (refer to FIG. 8 (b)). This situation corresponds to the fact that, due to correction, the shape of the line segment of corrected image 12 of FIG. 8 (a) has become closer to that of image 10 without fluctuations.

Meanwhile, when an image without fluctuations has been corrected, magnitude relationship between the frequencies at the respective peak angles in the input image and the corrected image is different from the relationship described above. This is because the image without fluctuations does not cause its shape to change due to fluctuations, and even if the average image of multiple frames is generated as a corrected image, the corrected image is the same as FIG. 6 (a). Accordingly, when the image without fluctuations has been corrected, the second angle histogram of the corrected image as well becomes same as that of the first angle histogram, and thus there is not much difference between the first and second frequencies at the respective peak angles in the input image and the corrected image.

To sum up, it is suggested that following expression 1 holds for an image with fluctuations; following expression 2 holds for an image without fluctuations. In an image actually photographed, an object moves between frames or the brightness for example changes, and thus the frequencies at the peak angle do not completely agree with each other. However, the first frequency at the peak angle in the input image is roughly equal to the second frequency at the peak angle in the corrected image.

$$\text{First frequency} < \text{Second frequency (an image with fluctuations) (expression 1)}$$

First frequency ≈ Second frequency (an image without fluctuations) (expression 2)

Hence, using expressions 1 and 2 allows determining whether an input image has fluctuations. If the comparison result holds expression 1, it is determined that the image has fluctuations; if the comparison result holds expression 2, it may be determined that the image has no fluctuations. If the result holds neither of expressions 1 and 2, it may be determined that the image has no fluctuations because a new object may have framed in or out, or the brightness between frames may have changed.

1-3-4 Process of setting correction parameter

Correction unit 101 creates an average image of multiple frames to correct image fluctuations. In this correction method, the number of images to be averaged is a correction parameter. A larger number of images to be averaged suppresses fluctuations more effectively, and vice versa. Meanwhile, a larger number of images to be averaged may cause the following disadvantages. (i) An average image is blurred. (ii) The processing load increases. (iii) When a new object has framed in or out, the image quality degrades. Accordingly, an appropriate number of images to be averaged needs to be set.

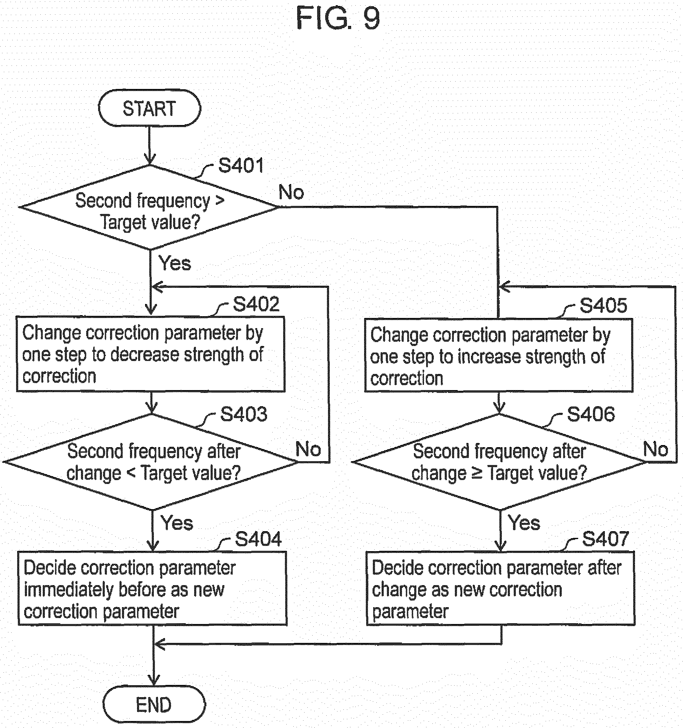

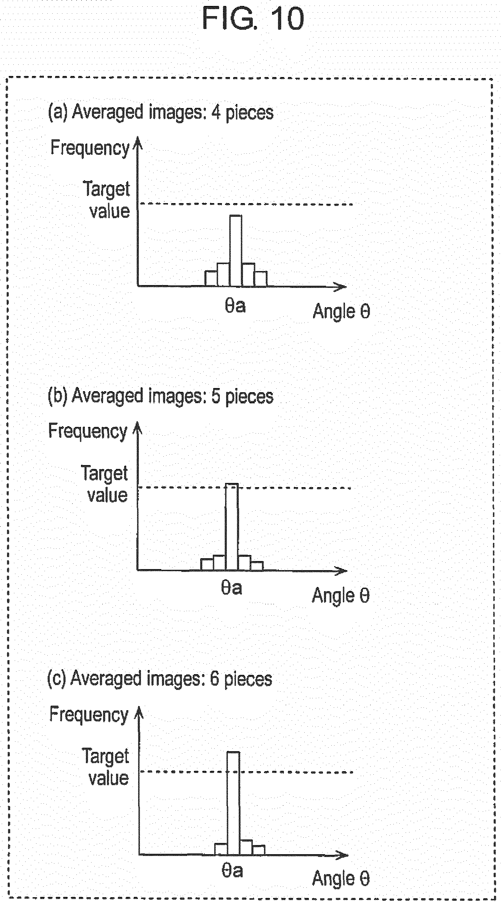

Hereinafter, a description is made of the process (S207 in FIG. 3) of setting a correction parameter executed when determined that fluctuations are present using FIGs. 9 and 10.

FIG. 9 is a flowchart illustrating an example of the process of setting a correction parameter, according to the first embodiment. FIG. 10 illustrates angle histograms of multiple corrected images corrected using different correction parameters, according to the first embodiment. Concretely, FIG. 10 (a) illustrates an angle histogram in a corrected image with 4 pieces of images to be averaged; FIG. 10 (b), 5 pieces; and FIG. 10 (c), 6 pieces.

First, determination unit 102 performs a second determination that determines whether or not the second frequency exceeds a target value (S401). Here, the target value is a value made by doubling the first frequency at the peak angle in the first angle histogram, or a value made by adding a given value to the first frequency, for example, which are decided with reference to the first frequency.

Determination unit 102, if determining that the second frequency exceeds the target value (Yes in S401), changes the correction parameter by one step to decrease the correction strength (S402). Concretely, determination unit 102 in this case decreases the number that is a correction parameter (hereinafter, referred to as an average number of pieces) of input images for generating an average image by one piece to change the value of the correction parameter by one step.

If the average number of pieces before being changed is 6 for example as shown by FIG. 10 (c), determination unit 102 decreases the average number of pieces by one step (one piece) to 5 pieces because the second frequency exceeds the target value. Here, the correction parameter is changed by one step each time, but may be changed by more than one step each time (e.g., two steps, three steps).

Next, determination unit 102 determines whether or not the second frequency after change is smaller than the target value (S403). More specifically, determination unit 102 performs correction using the value of the correction parameter after changing the given input image; calculates a frequency (a second frequency after change) at the peak angle in the angle histogram of the corrected image after correction; and determines whether or not the calculated second frequency is smaller than the target value. Determination unit 102, as shown by FIG. 10 (b) for example, calculates a frequency (a second frequency after change) at the peak angle in the angle histogram of the corrected image averaged with 5 pieces (the average number of pieces after change); and determines whether or not the calculated second frequency is smaller than the target value.

Then, determination unit 102, if determining that the second frequency after change is equal to or larger than the target value (No in S403), returns to step S402 to change the value of the correction parameter by one step to further decrease the strength of correction. More specifically, determination unit 102, as shown by FIG. 10 (b) for example, if determining that the second frequency of the corrected image averaged with an average number of 5 pieces is equal to or larger than the target value, changes the value of the correction parameter to an average number of 4 pieces, which is one more step (one piece) reduction.

Meanwhile, determination unit 102, if determining that the second frequency after change is smaller than the target value (Yes in S403), decides the value of the correction parameter immediately before as a new correction parameter (S404). Determination unit 102, in the example shown in FIG. 10 for example, determines that the second frequency in the corrected image corrected with an average number of 4 pieces is smaller than the target value, and thus decides 5 pieces (i.e., the value of the correction parameter immediately before), as a new value of the correction parameter, and terminates the process of setting the correction parameter.

In short, determination unit 102, if determining that the second frequency exceeds the target value, changes the value of the correction parameter to reduce the strength of correction until the second frequency becomes smaller than the target value, and decides the value of the correction parameter that has been changed immediately before the second frequency becomes smaller than the target value, as a new value of the correction parameter.

Meanwhile, determination unit 102, if determining that the second frequency does not exceed the target value (No in S401), changes the correction parameter by one step to increase the strength of correction (S405). Concretely, determination unit 102 in this case increases the number of pieces to be averaged by one to change the correction parameter by one step.

If the average number of pieces before change is 4 as shown by FIG. 10 (a) for example, determination unit 102 increases the average number of pieces by one step (one piece) to 5 pieces because the second frequency does not exceed the target value. Here, the correction parameter is changed by one step each time, but may be changed by more than one step each time (e.g., two steps, three steps).

Next, determination unit 102 determines whether or not the second frequency after change is equal to or larger than the target value (S406). More specifically, determination unit 102 performs correction using the correction parameter after changing the given input image; calculates a frequency (a second frequency after change) at the peak angle in the angle histogram of the corrected image after correction; and determines whether or not the calculated second frequency is smaller than the target value. Determination unit 102, as shown by FIG. 10 (b) for example, calculates a frequency (a second frequency after change) at the peak angle in the angle histogram of the corrected image averaged with 5 pieces (the average number of pieces after change); and determines whether or not the calculated second frequency is equal to or larger than the target value.

Determination unit 102, if determining that the second frequency after change is equal to or larger than the target value (Yes in S406), decides the value of the correction parameter after change as a new value of the correction parameter (S407). That is, determination unit 102, as shown in FIG. 10 (b) for example, if determining that the second frequency in the corrected image corrected with an average number of 5 pieces is equal to or larger than the target value, decides 5 pieces that is the value of the correction parameter after change, as a new value of the correction parameter, and terminates the process of setting the correction parameter.

Meanwhile, determination unit 102, if determining that the second frequency after change is smaller than the target value (No in S406), returns to step S405 to further change the value of the correction parameter by one step to increase the strength of correction. More specifically, determination unit 102, for example if determining that the second frequency in the corrected image corrected with an average number of 5 pieces is smaller than the target value, changes the value of the correction parameter to an average number of 6 pieces, which is an increase of one more step (one piece).

In short, determination unit 102, if determining that the second frequency does not exceed the target value, changes the value of the correction parameter to increase the strength of correction until the second frequency becomes equal to or larger than the target, and decides the value of the correction parameter when the second frequency becomes equal to or larger than the target value as a new value of the correction parameter.

From all of the above, determination unit 102 calculates second frequencies for the respective corrected images obtained by correcting with different values of the correction parameter, and decides the value of the correction parameter corresponding to the minimum second frequency among the second frequencies equal to or larger than the target value, as a new value of the correction parameter.

1-4 Advantages

As described above, image processing device 100 includes correction unit 101 and determination unit 102. Correction unit 101 corrects the respective input images using the correction parameter to suppress image fluctuations, and outputs the correction result as multiple corrected images. Determination unit 102 calculates a first distribution and a second distribution. The first distribution represents a frequency distribution of edge angles in a given input image of the multiple input images. The second distribution represents a frequency distribution of edge angles in a given corrected image that is the given input image corrected by the correction unit and is output. Determination unit 102 performs a first determination that determines the presence or absence of fluctuations in the given input image using the first and second distributions calculated. Further, determination unit 102 updates the correction parameter using the result of the first determination.

This operation determines the presence or absence of fluctuations and updates the correction parameter using the determination result, and thus image fluctuations can be appropriately corrected even if the strength of image fluctuations changes.

Determination unit 102, if the first determination represents that the shape of the second angle histogram is more peaked than that of the first angle histogram, determines that image fluctuations are present in the given input image; otherwise, not present. Then, determination unit 102, if determining that the given input image has fluctuations, updates the correction parameter; otherwise, does not update.

This operation, if the shape of the second angle histogram of the given corrected image is more peaked than that of the first angle histogram of the given input image, determines that image fluctuations are present and updates the correction parameter; otherwise, not present and avoids correcting the correction parameter. This reduces the processing load of updating the correction parameter and allows the correction parameter to be updated to an appropriate value when correction is performed.

Determination unit 102, if the first determination represents that the second frequency at the peak angle in the second angle histogram exceeds the first frequency at the peak angle in the first angle histogram, determines that the shape of the second distribution is more peaked than that of the first distribution; otherwise, not more peaked.

According to this operation, if the second frequency at the peak angle in the second angle histogram of the given corrected image exceeds the first frequency at the peak angle in the first angle histogram of the given input image, determination can be made that image fluctuations are present, which facilitates determination of the presence or absence of image fluctuations.

Correction unit 101 performs correction by outputting an average image that is produced by averaging a given number of input images (including a given input image) of the multiple input images. Then, determination unit 102, if determining that the given input image has fluctuations, updates the correction parameter by updating the given number of pieces as the correction parameter.

Accordingly, for a large degree of fluctuations, correction with a stronger correction strength can be made by increasing the number (as the correction parameter) of input images for generating an average image. For a small degree of fluctuations, sufficient correction can be made while reducing blurring of the corrected image, the processing load, deterioration of the image quality, by decreasing the number (as the correction parameter) of input images for generating an average image. That is, the correction parameter can be updated to an appropriate value, and thus fluctuations can be corrected appropriately.

Determination unit 102 further performs a second determination that determines whether or not the second frequency at the peak angle in the second angle histogram exceeds the target value with reference to the first frequency at the peak angle in the first angle histogram. Then, determination unit 102, if determining that the second frequency exceeds the target value, changes the value of the correction parameter to reduce the strength of correction until the second frequency becomes smaller than the target value, and decides the value of the correction parameter that has been changed immediately before the second frequency becomes smaller than the target value, as a new value of the correction parameter, to update the correction parameter; otherwise, changes the value of the correction parameter to increase the strength of correction until the second frequency becomes equal to or larger than the target value, and decides the value of the correction parameter when the second frequency becomes equal to or larger than the target value, as a new value of the correction parameter, to update the correction parameter.

This operation compares the target value with reference to the first frequency with the second frequency to decide the correction parameter, which allows the correction parameter to be updated to an appropriate value.


SECOND EXEMPLARY EMBODIMENT

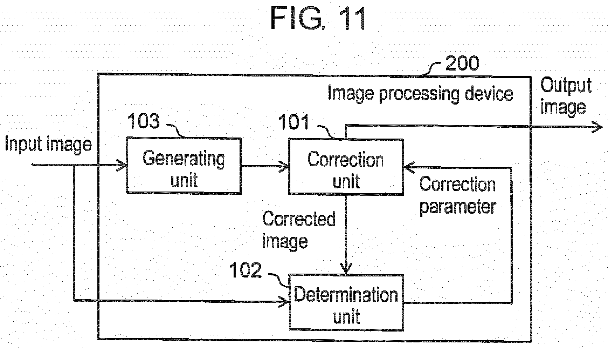

Next, a description is made of the second exemplary embodiment using FIGs. 11 through 14.


2-1 Detailed configuration of image processing device

FIG. 11 is a block diagram illustrating the configuration of image processing device 200 according to the second embodiment. Hereinafter, a component same as that of the first embodiment is given the same reference mark to omit its description.

Image processing device 200 includes correction unit 101, determination unit 102, and generating unit 103. That is, image processing device 200 has generating unit 103 in addition to the configuration of image processing device 100 according to the first embodiment. In the first embodiment, image processing device 100 targets images photographed by a fixed camera without panning for image processing. In the second embodiment, image processing device 200 may target images photographed by a fixed camera with panning and images photographed by an unfixed camera. That is to say, image processing device 200 according to the second embodiment is an image processing device capable of supporting a camera even in movement.


2-1-1 Generating unit

Generating unit 103 specifies a moving object region including a moving object that moves between a given input image and its subsequent frame both in the given input image and in its subsequent frame. Then, generating unit 103 generates a position-aligned image by moving the position of the moving object region in the subsequent frame to that in the given input image. In other words, generating unit 103 receives two input images (the first one as a reference and the second one) and creates an image including a moving object, where the position of the moving object that has moved in the second image is aligned to that in the first image.

Correction unit 101 performs correction using the given input image and the position-aligned image generated by generating unit 103.

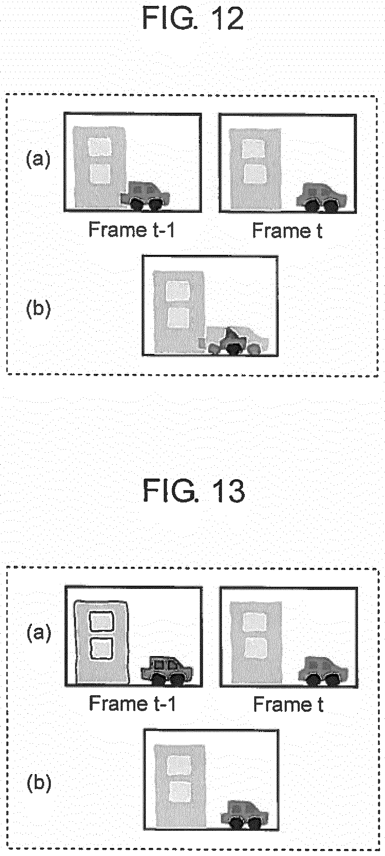

Next, a detailed description is made of position alignment executed in generating unit 103 using FIGs. 12 and 13.

FIG. 12 illustrates some related images when an average image has been created from an image not position-aligned by motion compensation, according to the second embodiment. FIG. 13 illustrates some related images when an average image has been created from an image position-aligned by motion compensation, according to the second embodiment.

FIG. 12 (a) illustrates two temporally continuous frames photographed by a fixed camera. A moving object moving between the two frames are photographed. Without generating unit 103 or without the position alignment performed by generating unit 103, creating an average image by correction unit 101 results in the image shown by FIG. 12 (b). That is, creating an average image without the position alignment performed results in an inappropriate image (object wobbling in the region of a moving object) generated. If the image as shown by FIG. 12 (b) is input to determination unit 102, object wobbling for example that is not present in the actual image occurs, which prevents a frequency at an appropriate peak angle to be obtained in the angle histogram.

Hence, to suppress disadvantageous effects on a corrected image due to object wobbling or camera movement, generating unit 103 executes position alignment. Concretely, generating unit 103 aligns the position of the moving object in frame $t-1$ to that in frame $t$ of FIG. 12 (a) to generate a motion-compensated image shown by frame $t-1$ of FIG. 13 (a). As shown by FIG. 13 (a), because the position of the object in frame $t-1$ agrees with that in frame $t$, creating an average image using frame $t-1$ and frame $t$ provides an image with an appropriate position of the moving object as shown by FIG. 13 (b).

FIGs. 12 and 13 show a case where the average number of pieces is 2; the situation is the same for a case where the average number is 3 or more. If the average number is 5, assuming the position of frame $t$ is the reference position, generating unit 103 creates new images by aligning the images in remaining frames $t-1$ through $t-4$, and creates an average image using the new images, which provides the same advantages as those of images in consideration of the position of the object in the same way as FIG. 13 (b).

FIGs. 12 and 13 illustrate images photographed by a fixed camera with an object moving. Even if the camera has moved, an image aligned to the reference image can be created, and thus a camera other than a fixed one can be used as well.

The method of aligning used in generating unit 103 may be of any type. If a camera moves, a method like characteristic point matching may be applied that estimates motion of all the images between frames. If an object is moving, a method such as optical flow may be applied that estimates a moving amount for each region.

2-2 Advantages

As described above, image processing device 200 includes correction unit 101, determination unit 102, and additionally generating unit 103. Generating unit 103 specifies a moving object region including a moving object moving in between a given input image and its subsequent frame, for each of the given input image and its subsequent frame. Generating unit 103 moves the position of the moving object region in the subsequent frame to that in the given input image to generate a position-aligned image. Correction unit 101 performs correction using the given input image and the position-aligned image generated by the generating unit.

This operation performs correction using a given input image and a position-aligned image, which reduces influence of a moving object on the correction for appropriate correction.

OTHER EXEMPLARY EMBODIMENTS

Hereinbefore, the embodiments are described to exemplify the technology disclosed in this patent application. The technology of the disclosure, however, is not limited to these embodiments, but is applicable to other embodiments appropriately devised through modification, substitution, addition, omission for example. Further, some components described in the embodiments can be combined to devise a new embodiment.

Hereinafter, other embodiments are exemplified.

For example, in the above-described embodiments, a frequency at a peak angle is used to determine whether or not the shape of the second angle histogram is more peaked than that of the first angle histogram. However, the presence or absence of image fluctuations may be determined by the following way. That is, as an index other than a frequency at a peak angle, variance of frequencies around a peak angle are calculated in the angle histograms of a given input image and a given corrected image, and the variance values are compared. More specifically, determination unit 102, if the second variance value around the peak angle in the second angle histogram is smaller than the first variance value around the peak angle in the first angle histogram, may determine that the shape of the second angle histogram is more peaked than that of the first angle histogram; otherwise, not more peaked. If image fluctuations are occurring, change of the shape causes frequencies that were originally present at the peak angle to be dispersively distributed around the peak angle. Accordingly, the variance value around the peak angle increases if the input image has fluctuations. Here, when the variance value around the peak angle is used, expression 1 corresponds to expression 3; expression 2 corresponds to expression 4.

$$\text{First variance value} > \text{Second variance value (an image}$$
$$\text{with fluctuations) (expression 3)}$$

$$\text{First variance value} \approx \text{Second variance value (an image without}$$
$$\text{fluctuations) (expression 4)}$$

Hence, using expressions 3 and 4 allows determining whether a given input image has fluctuations. If the comparison result holds expression 3, it is determined that the image has fluctuations; if the comparison result holds expression 4, it is determined that the image has no fluctuations. If the result holds neither of expressions 3 and 4, it may be determined that the image has no fluctuations because a new object may have framed in or out, or the brightness between frames may have changed.

According to this operation, if the second variance value around the peak angle in the second angle histogram of the corrected image is smaller than the first variance value around the peak angle in the first angle histogram of the input image, determination can be made that fluctuations are present, which facilitates determination of the presence or absence of image fluctuations.

Besides, determination of the presence or absence of image fluctuations may be performed by comparing derivative values calculated at the peak angle in the respective angle histograms of the given input image and the given corrected image. More specifically, determination unit 102, if the second absolute value of the derivative value at the peak angle in the second angle histogram exceeds the first absolute value of the derivative value at the peak angle in the first distribution, may determine that the shape of the second angle histogram is more peaked than that of the first angle histogram; otherwise, not more peaked.

According to this operation, if the second absolute value of the derivative value at the peak angle in the second angle histogram of the given corrected image exceeds the first absolute value of the derivative value at the peak angle in the first angle histogram of the given input image, determination can be made that fluctuations are present, which facilitates determination of the presence or absence of image fluctuations.

Determination unit 102 may determine whether or not the shape of the second angle histogram is more peaked than that of the first angle histogram by comparing the actual shape of the first angle histogram with the actual shape of the second angle histogram.

In the above-described embodiments, correction unit 101 performs correction by outputting an average image that is produced by averaging a given number of input images (including a given input image) of the multiple input images as a given corrected image, but not limited to this method. For example, correction may be performed by the following way. That is, with the average number of pieces as a fixed value, a predetermined number of average images are once created. If the frequency of peak angles in the corrected image does not reach the target value, a new average image is created once again with the predetermined number of the average images once created added (multistep averaging). In this case, the number of times of creating average images is a correction parameter.

Assumption is made that correction unit 101 performs a first averaging for the respective input images to provide one-step average images, and performs a second averaging for the respective one-step average images to provide two-step average images. Here, a case is considered where $n$th ($n$ is a natural number) averaging is performed. In this case, correction unit 101 may correct a given input image by generating $n$-step average images through $n$th averaging and output the $n$-step average image as a given corrected image. Then, determination unit 102, if determining that the given input image has fluctuations, may update the correction parameter by updating the number of times of averaging as the correction parameter. In this way, besides the number of times of creating an average image, whether performing a process of suppressing fluctuations after creating an average image with a predetermined number of pieces may be used as a correction parameter.

According to this operation, for a large degree of fluctuations, effective correction can be made by increasing the number (as a correction parameter) of times of averaging. For a small degree of fluctuations, sufficient correction can be made while reducing blurring of a corrected image, the processing load, deterioration of the image quality, by decreasing the number (as a correction parameter) of times of averaging. That is, the correction parameter can be updated to an appropriate value, and thus fluctuations can be corrected appropriately even if the strength of fluctuations changes

In the above-described image processing device 100 according to the first embodiment, an image photographed by a fixed camera without a panning function, placed on a fixed position with a fixed attitude is input as an input image. In this case, data of a background image can be used that is an image photographed by a fixed camera in a state without fluctuations. In short, a target value using a third frequency may be set. For example, a third frequency at the peak angle of the third histogram (third distribution) preliminarily generated from a background image is recorded. Then, a value (e.g., 70% of the third frequency) with reference to the third frequency is set to the target value used in the second determination. In this way, a correction parameter is decided by comparing a target value with reference to the third frequency with the second frequency, and thus the correction parameter can be updated to an appropriate value.

In the above-described embodiments, determination unit 102, if determining "no" in step S206 of FIG. 3, determines that the given input image has no fluctuations and does not change the value of the correction parameter referred to by correction unit 101, but not limited to this operation. Determination unit 102, if determining that the given input image has no fluctuations, may set the value of the correction parameter with an average number of pieces of one. Determination unit 102, if determining "yes" only once in step S206, performs the process (S207) of setting a correction parameter, but not limited to this operation. Determination unit 102, only if determining "yes" continuously a certain number of times in step S206, may perform the process of setting a correction parameter.

In the above-described embodiments, correction unit 101 performs correction by averaging multiple input images. However, correction only by averaging may cause a further blurred image in addition to blurring due to image fluctuations. In short, a more number of images to be averaged causes a further blurred image (i.e., a corrected image) after averaging. To restore a blurred image, a narrowing process may be applied to an average image (corrected image) after it is created for example.

Examples of a narrowing process in this case include a filtering process for image narrowing such as unsharp masking. In unsharp masking, its filter size may be changed, for example to a wider filter size for a more number of pieces to be averaged, and vice versa. This reduces blurring due to image fluctuations as well as blurring due to averaging of images. In the same way, to restore contrast degraded due to fluctuations, contrast correction may be further performed after an average image is created.

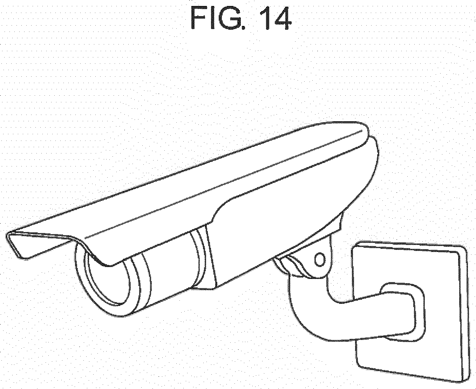

In the above-described embodiments, the description is made of an image processing device, but not limited to it. For example, the present disclosure can be implemented as a monitoring camera including the above-described image processing device. For example, FIG. 14 illustrates an example product of a monitoring camera according to a modified embodiment. The monitoring camera according to the present disclosure is for example a camera placed for photographing outdoor scenes used for monitoring the amount of traffic, various types of infrastructure facilities, and other objects.

Besides, a monitoring camera according to the present disclosure can be applied to an underwater camera for photographing underwater scenes. For example, such an underwater camera can be used for monitoring aquatic creatures, or inspecting articles immersed in water in a factory.

The present disclosure can be applied to an image processing method.

The components (correction unit 101 and determination unit 102) composing image processing device 100 according to the present disclosure and the components (correction unit 101, determination unit 102, and generating unit 103) composing image processing device 200 according to the present disclosure may be implemented either by software programs executed on a computer including a CPU (central processing unit), RAM, ROM (read only memory), communication interface, I/O port, hard disk drive, and display, or by hardware devices such as an electronic circuit.

As described above, the description is made of the embodiments to exemplify the technology according to the present disclosure. For this purpose, accompanying drawings and detailed descriptions are provided.

Accordingly, some components described in the detailed descriptions and accompanying drawings may include, besides what is essential for solving problems, what is not essential in order to exemplify the above-described technology. Hence, the fact that such inessential components are included in the detailed descriptions and accompanying drawings does not mean that such inessential components are immediately acknowledged as essential.

The above-described embodiments are for exemplification of the technology in the disclosure. Hence, the embodiments may undergo various kinds of modification, substitution, addition, and/or omission within the scope of the claims and their equivalent technology.

INDUSTRIAL APPLICABILITY

An image processing device, a monitoring camera, and an image processing method, according to the present disclosure can be used for a VCR, TV set, camera, and other similar devices.

BRIEF DESCRIPTION OF DRAWINGS

| 100, 200 | image processing device |
| 101 | correction unit |
| 102 | determination unit |
| 103 | generating unit |

**Claims**

1. An image processing device comprising:

   a correction unit that performs correction for suppressing image fluctuations on each of a plurality of input images using a correction parameter and outputs results of the correction as a plurality of corrected images; and
   a determination unit that (i) calculates a first distribution and a second distribution, the first distribution representing a frequency distribution of edge angles in a given input image of the plurality of input images, the second distribution representing a frequency distribution of edge angles in a given corrected image that is the given input image corrected by the correction unit and is output, (ii) performs a first determination that determines presence or absence of fluctuations in the given input image using the first and the second distributions calculated, and (iii) performs updating of the correction parameter using results of the first determination.

2. The image processing device of claim 1, wherein the determination unit in the first determination,
   when a shape of the second distribution is more peaked than a shape of the first distribution, determines that fluctuations are present in the given input image; and
   when the shape of the second distribution is not more peaked than the shape of the first distribution, determines that fluctuations are not present in the given input image, and
   wherein the determination unit,
   when determining that fluctuations are present in the given input image, performs the updating; and
   when determining that fluctuations are not present in the given input image, does not perform the updating.

3. The image processing device of claim 2, wherein the determination unit in the first determination,
   when a second frequency at a peak angle of the second distribution exceeds a first frequency at a peak angle of the first distribution, determines that a shape of the second distribution is more peaked than a shape of the first distribution; and
   when the second frequency at the peak angle of the second distribution is equal to or smaller than the first frequency at the peak angle of the first distribution, determines that the shape of the second distribution is not more peaked than the shape of the first distribution.

4. The image processing device of claim 2, wherein the determination unit,
   when a second variance value around a peak angle of the second distribution is smaller than a first variance value around a peak angle of the first distribution, determines that the shape of the second distribution is more peaked than the shape of the first distribution, and
   when the second variance value around the peak angle of the second distribution is equal to or larger than the first variance value around the peak angle of the first distribution, determines that the shape of the second distribution is not more peaked than the shape of the first distribution.

5. The image processing device of claim 2, wherein the determination unit,
   when a second absolute value of a derivative value at a peak angle of the second distribution exceeds a first absolute value of a derivative value at a peak angle of the first distribution, determines that the shape of the second distribution is more peaked than the shape of the first distribution; and
   when the second absolute value of the derivative value at the peak angle of the second distribution is equal to or smaller than the first absolute value of the derivative value at the peak angle of the first distribution, determines that the shape of the second distribution is not more peaked than the shape of the first distribution.

**6.** The image processing device of claim 1,
wherein the correction unit performs the correction by outputting , as the given corrected image, an average image that is produced by averaging a given number of input images, including the given input image, of the plurality of input images; and
wherein the determination unit, when determining that fluctuations are present in the given input image, performs the updating by updating the given number of pieces as the correction parameter.

**7.** The image processing device of claim 1, wherein
assumption is made that the correction unit performs first averaging for each of the plurality of input images to provide a plurality of one-step average images and performs second averaging for the plurality of one-step average images to provide a plurality of two-step average images,
the correction unit, when performing $n$th averaging, $n$ being a natural number, corrects the given input image by generating an $n$-step average image through the $n$th averaging and outputs the $n$-step average image as the given corrected image, and
the determination unit, when determining that fluctuations are present in the given input image, performs the updating by updating the number of times of averaging as the correction parameter.

**8.** The image processing device of claim 1,
wherein the determination unit performs the updating by

(i) further performing a second determination that determines whether or not a second frequency at a peak angle of the second distribution exceeds a target value with reference to a first frequency at a peak angle of the first distribution, and
(ii) when determining that the second frequency exceeds the target value, changing a value of the correction parameter to reduce strength of the correction until the second frequency becomes smaller than the target value, and deciding the value of the correction parameter that has been changed immediately before the second frequency becomes smaller than the target value, as a new value of the correction parameter, and
when determining that the second frequency does not exceed the target value, performing the updating by changing the value of the correction parameter to increase the strength of the correction until the second frequency becomes equal to or larger than the target value, and deciding the value of the correction parameter when the second frequency becomes equal to or larger than the target value, as a new value of the correction parameter.

**9.** The image processing device of claim 1,
wherein the image processing device receives an image taken by a camera placed on a fixed position with a fixed attitude as the input image,
wherein the determination unit performs the updating by

(i) calculating a third distribution representing a frequency distribution of edge angles in a background image taken by the camera in a state without fluctuations,
(ii) further performing a second determination that determines whether or not a second frequency at a peak angle in the second distribution exceeds a target value with reference to a third frequency at a peak angle of the third distribution, and
(iii) when determining that the second frequency exceeds the target value, changing a value of the correction parameter to reduce strength of the correction until the second frequency becomes smaller than the target value, and deciding the value of the correction parameter that has been changed immediately before the second frequency becomes smaller than the target value, as a new value of the correction parameter, and
when determining that the second frequency does not exceed the target value, performing the updating by changing the value of the correction parameter to increase the strength of the correction until the second frequency becomes equal to or larger than the target value, and deciding the value of the correction parameter when the second frequency becomes equal to or larger than the target value, as a new value of the correction parameter.

**10.** The image processing device of claim 1,
wherein the plurality of input images are moving images taken at a plurality of different time points,
wherein the image processing device further comprises a generating unit that generates a position-aligned image by

(1) specifying a moving object region including a moving object that moves between the given input image and a frame subsequent to the given input image both in the given input image and in the frame subsequent to the given input image, and
(2) performing position alignment that moves a position of the moving object region in the subsequent frame to a position of the moving object region in the given input image, and

wherein the correction unit performs the correction using the given input image and the position-aligned image generated by the generating unit.

11. An image processing method comprising:

(1) performing correction for suppressing image fluctuations on each of a plurality of input images using a correction parameter and outputting results of the correction as a plurality of corrected images;
(2) calculating a first distribution and a second distribution, the first distribution representing a frequency distribution of edge angles in a given input image of the plurality of input images, the second distribution representing a frequency distribution of edge angles in a given corrected image that is the given input image corrected and is output, and
(3) performing a first determination that determines presence or absence of fluctuations in the given input image using the first and second distributions calculated, and
(4) updating the correction parameter using results of the first determination.

12. The image processing method of claim 11,
wherein the first determination,
when a shape of the second distribution is more peaked than a shape of the first distribution, determines that fluctuations are present in the given input image; and
when the shape of the second distribution is not more peaked than the shape of the first distribution in the first determination, determines that fluctuations are not present in the given input image, and
wherein the updating,
when the first determination determines that fluctuations are present in the given input image, performs the updating; and
when the first determination determines that fluctuations are not present in the given input image, does not performs the updating.

13. The image processing method of claim 12,
wherein the first determination,
when a second frequency at a peak angle of the second distribution exceeds a first frequency at a peak angle of the first distribution, determines that the shape of the second distribution is more peaked than the shape of the first distribution; and
when the second frequency at the peak angle of the second distribution is smaller than the first frequency at the peak angle of the first distribution, determines that the shape of the second distribution is not more peaked than the shape of the first distribution.

14. The image processing method of claim 11, further comprising performing a second determination that determines whether or not a second frequency at a peak angle in the second distribution exceeds a target value with reference to a first frequency at a peak angle of the first distribution,
wherein the updating,
when the second determination determines that the second frequency exceeds the target value, changes a value of the correction parameter to reduce strength of the correction until the second frequency becomes smaller than the target value, and decides the value of the correction parameter that has been changed immediately before the second frequency becomes smaller than the target value, as a new value of the correction parameter, and
when the second determination determines that the second frequency does not exceed the target value, changes the value of the correction parameter to increase the strength of the correction until the second frequency becomes equal to or larger than the target value, and decides the value of the correction parameter when the second frequency becomes equal to or larger than the target value, as a new value of the correction parameter.

15. A program for making a computer execute the image processing method of claim 11.

# FIG. 1

FIG. 2A

10

FIG. 2B

(a) 11a 11b 11c 11d 11e

Averaging

(b) 12

# FIG. 3

```
                    ( START )
                        │
                        ▼           ┌ S201
          ┌──────────────────────────────┐
          │  Receive input images and corrected │
          │             images             │
          └──────────────────────────────┘
                        │           ┌ S202
          ┌──────────────────────────────┐
          │  Detect vertical edge and horizontal │
          │              edge              │
          └──────────────────────────────┘
                        │           ┌ S203
          ┌──────────────────────────────┐
          │       Calculate edge angle      │
          └──────────────────────────────┘
                        │           ┌ S204
          ┌──────────────────────────────┐
          │     Generate angle histogram    │
          └──────────────────────────────┘
                        │           ┌ S205
          ┌┃────────────────────────────┃┐
          │┃        Specify peak angle      ┃│
          └┃────────────────────────────┃┘
                        │
                        ▼           ┌ S206
                  ╱──────────────╲
                 ╱  Second frequency ╲   No
                ╲  > first frequency?  ╱──────────┐
                 ╲──────────────╱             │
                        │ Yes                 │
                        ▼     ┌ S207            ▼    ┌ S208
          ┌┃────────────────┃┐    ┌──────────────────┐
          │┃ Set correction parameter ┃│    │ Determine that no image │
          └┃────────────────┃┘    │ fluctuations are present │
                        │             └──────────────────┘
                        ◄──────────────────────┘
                        ▼
                    (  END  )
```

# FIG. 4

Edge intensity
in the vertical direction

θ

Pixel

Edge intensity
in the horizontal direction

# FIG. 5

```
        START
          |
          |  ┌ S301
          v
┌──────────────────────────┐
│ Obtain angle histograms of input │
│ image and corrected image        │
└──────────────────────────┘
          |
          |  ┌ S302
          v
┌──────────────────────────┐
│     Obtain peak angles    │
└──────────────────────────┘
          |
          |  ┌ S303
          v
     ╱────────────╲              No
    ╱ Common peak   ╲────────────────────────┐
    ╲ angle exist?  ╱                          │
     ╲────────────╱                            │
          | Yes                                │
          |  ┌ S304                            |  ┌ S305
          v                                    v
┌──────────────────────┐         ┌──────────────────────────┐
│ Output common peak angle │     │ Output peak angle of corrected │
└──────────────────────┘         │ image                          │
          |                       └──────────────────────────┘
          v                                    │
          |<───────────────────────────────────┘
          v
        END
```

# FIG. 6

(a)                                    10

Edge angle

(b)

Frequency

θa          Angle θ

# FIG. 7

(a)

11a

→ Edge angle

(b)

Frequency

θa   Angle θ

# FIG. 8

(a)

12

→ Edge Angle

(b)

Frequency

θa

Angle θ

# FIG. 9

START

S401
Second frequency >
Target value?

No

Yes

S402
Change correction parameter by
one step to decrease strength of
correction

S405
Change correction parameter by
one step to increase strength of
correction

S403
Second frequency after
change < Target value?

No

S406
Second frequency after
change ≥ Target value?

No

Yes

Yes

S404
Decide correction parameter
immediately before as new
correction parameter

S407
Decide correction parameter after
change as new correction
parameter

END

# FIG. 10

(a) Averaged images: 4 pieces

(b) Averaged images: 5 pieces

(c) Averaged images: 6 pieces

# FIG. 11

# FIG. 12

(a)

Frame t-1  Frame t

(b)

# FIG. 13

(a)

Frame t-1  Frame t

(b)

FIG. 14

## INTERNATIONAL SEARCH REPORT

| International application No. |
| --- |
| PCT/JP2016/000573 |

| A. CLASSIFICATION OF SUBJECT MATTER |
| --- |
| *H04N5/232*(2006.01)i, *G06T5/50*(2006.01)i, *H04N5/225*(2006.01)i |

According to International Patent Classification (IPC) or to both national classification and IPC

| B. FIELDS SEARCHED |
| --- |
| Minimum documentation searched (classification system followed by classification symbols)<br>H04N5/232, G06T5/50, H04N5/225 |

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X<br>Y<br>A | WO 2015/005196 A1  (Hitachi Kokusai Electric Inc.),<br>15 January 2015 (15.01.2015),<br>paragraphs [0016] to [0092]; fig. 14<br>(Family: none) | 1,7,11,15<br>6<br>2-5,8-10,<br>12-14 |
| Y<br>A | JP 2014-206772 A  (Hitachi Kokusai Electric Inc.),<br>30 October 2014 (30.10.2014),<br>paragraph [0061]<br>& US 2016/0006936 A1<br>paragraph [0086]<br>& WO 2014/148114 A1      & EP 2977954 A | 6<br>10 |

| ☒ Further documents are listed in the continuation of Box C. | ☐ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>13 April 2016 (13.04.16) | Date of mailing of the international search report<br>26 April 2016 (26.04.16) |
| --- | --- |
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

**INTERNATIONAL SEARCH REPORT**

International application No.

PCT/JP2016/000573

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2012-89929 A  (Canon Inc.),<br>10 May 2012 (10.05.2012),<br>abstract; paragraph [0019]<br>& US 2012/0092495 A1<br>abstract; paragraph [0026] | 9-10 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011229030 A

- JP 2013236249 A